# EUROPEAN PATENT APPLICATION

(11) **EP 4 679 932 A1**
(43) Date of publication of application: **14.01.2026**
(21) Application number: 24785071.2
(22) Date of filing: 20.03.2024
(51) Int. Cl.: H04W 76/16, H04W 60/00, H04W 48/18, H04L 41/0894

(54) **METHOD AND DEVICE FOR SUPPORTING SIMULTANEOUS USE OF MULTIPLE USER PLANES IN WIRELESS COMMUNICATION SYSTEM**

(30) Priority: 06.04.2023 KR 20230045465
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); KIM, Dongyeon, Suwon-si Gyeonggi-do 16677 (KR); BAEK, Youngkyo, Suwon-si Gyeonggi-do 16677 (KR)
(74) Representative: Gulde & Partner
(86) International application number: PCT/KR2024/003495
(87) International publication number: WO 2024/210363

(57) **Abstract**

The present disclosure relates to a 5G or 6G communication system for supporting higher data transfer rates. A method performed by a terminal in a wireless communication system of the present disclosure may comprise the steps of: receiving terminal policy information from an access and mobility management function (AMF) entity via a base station; updating a terminal policy on the basis of the received terminal policy information; transmitting the updated terminal policy information to the AMF entity; when traffic occurs, selecting at least one radio access technology (RAT) associated with the traffic on the basis of the updated terminal policy information; and transmitting, to the AMF entity, a protocol data unit (PDU) session establishment request message on the basis of the selected at least one RAT.

## Description

### [Technical Field]

The disclosure relates to a wireless communication system and, more particularly, to a method and a device for supporting simultaneous use of multiple network slices and radio access technologies in the wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

A 5G mobile communication network includes a 5G user equipment (UE), a 5G radio access network (RAN), and a 5G cire network. The 5G core network includes network functions (NFs), such as an access and mobility management function (AMF) which provides a mobility management function of a UE, a session management function (SMF) which provides a session management function, a user plane function (UPF) which serves to transfer data, a policy control function (PCF) which provides a policy control function, a unified data management (UDM) which provides a function to manage data such as subscriber data and policy control data, and a unified data repository (UDR) which stores data of various network functions (NFs) such as the UDM.

In a 5G system, network slicing technology refers to a technology and architecture that enables virtualized, independent, multiple logical networks within a single physical network. A network operator configures a virtual end-to-end network, referred to as a network slice, to provide services that satisfies service/application-specific requirements. Network slices are distinguished by an identifier called Single-Network Slice Selection Assistance Information (S-NSSAI), and the network operator provides one or more network slices to a UE to enable the UE to receive services.

Specifically, in the 5G system, when a UE performs network registration, the UE transmits, to an AMF, identifier information on network slices to be requested (i.e., Requested S-NSSAIs), and the AMF provides, to the UE, information on network slices that can be used by the UE (Allowed NSSAI) in consideration of the Requested S-NSSAIs and subscriber information. Even when the UE does not provide information about requested slices, the AMF may provide Allowed NSSAI to the UE, and, in this case, the Allowed NSSAI may include information on default configured slices (Default Configured NSSAI) and information on default subscribed slices among subscribed slices included in the UE subscriber information (i.e., Default Subscribed S-NSSAIs).

When no slice can be included in the Allowed NSSAI (for example, when Default Configured NSSAI nor Default Subscribed S-NSSAIs are absent or unavailable), the AMF transmits, to the UE, a network registration reject message including a cause code indicating registration rejection due to the absence of available slices.

Meanwhile, when an arbitrary slice is to be included in the Allowed NSSAI of the UE, a Network Slice Admission Control (NSAC) procedure and a Network Slice-Specific Authentication and Authorization (NSSAA) procedure may be performed for the slice. In the NSAC procedure, whether the slice is allowed is determined based on the number of UEs currently registered in the specific slice and the maximum number of UEs allowed for the slice (i.e., determination of whether to include the slice in the Allowed NSSAI). Specifically, a Network Slice Admission Control Function (NSACF) monitors, for each network slice subject to NSAC, the number of UEs registered per slice and the number of established PDU sessions, and may perform control such that the number of UEs registered per slice and the number of established PDU sessions are maintained below the maximum number of registered UEs and the maximum number of PDU sessions, respectively. In this case, when a new UE is registered to or an existing registered UE is deregistered from a slice subject to NSAC, the AMF may transmit an update request message to notify the NSACF thereof. When a new PDU session is established in or an existing PDU session is released from a slice subject to NSAC, the SMF may transmit an update request message to notify the NSACF thereof. Upon receiving a message notifying registration of a new UE to a slice or a message notifying establishment of a new PDU session, the NSAC may determine whether to allow the slice based on the maximum number of UEs and the maximum number of PDU sessions for the slice, and then include the determination on admission or rejection in each response message.

To transmit and receive data to and from a specific data network (DN) via allowed slices (Allowed NSSAIs), the UE may select one of the allowed slices, request establishment of a Packet Data Unit (PDU) session to a specific Data Network Name (DNN) in the slice, and transmit and receive data via the established PDU session. A PDU session may include multiple traffic flows, and the traffic flows may consist of two types: Guaranteed Bitrate Quality-of-Service Flows (GBR QoS Flows) and non-GBR QoS Flows.

When a slice to which a PDU session in use for application traffic transmission and reception belongs becomes unavailable, degradation of user quality may occur due to interruption of application traffic transmission and reception. A slice unavailability state may require one or all PDU sessions included in any network slice to be moved to another network slice: for example, when congestion arises in various 5G network entities belonging to the network slice, when use of a particular slice needs to be temporarily or permanently suspended for operational reasons (e.g., equipment replacement and upgrade), when application traffic needs to be moved to another slice due to performance degradation of the network slice transmitting the application traffic, or when the UE moves to an area where the corresponding network slice is not supported.

The disclosure proposes a method by which a UE transmits and receives application data with a server via data plane resources allocated to two or more network slices (for example, PDU sessions established on two network slices). Accordingly, even in a slice unavailability state, application data may be transmitted and received by utilizing another slice, thereby preventing deterioration of user experience. In addition, when application requirements cannot be satisfied through transmission and reception via a single slice (for example, insufficient uplink throughput or downlink throughput), application requirements may be satisfied by simultaneously transmitting and receiving application data through multiple slices.

Furthermore, the disclosure proposes a method by which a UE transmits and receives application data through data plane resources via two or more radio access technologies (RATs).

### [Solution to Problem]

The disclosure proposes a method by which a UE may transmit and receive application data with a server via data plane resources allocated to two or more network slices (for example, PDU sessions established on two network slices). In addition, the disclosure proposes a method by which a UE may transmit and receive application data with a server by utilizing one or more PDU sessions having data plane resources allocated to different RATs.

### [Advantageous Effects of Invention]

According to embodiments proposed in the disclosure, even when a network slice is unavailable, a UE may transmit and receive application data with a server by utilizing another slice, thereby preventing deterioration of user experience. In addition, when application requirements cannot be satisfied through transmission and reception via a single slice (for example, due to insufficient uplink throughput or downlink throughput), the application requirements can be satisfied by simultaneously transmitting and receiving application data through multiple slices.

According to embodiments proposed in the disclosure, even when a specific RAT is unavailable, a UE may transmit data by utilizing another RAT within a PDU session. Furthermore, since two RATs can be simultaneously utilized to transmit application data, faster transmission and reception of data can be achieved.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a communication network including a network entity in a wireless communication system according to various embodiments of the disclosure.
FIG. 2 illustrates an operation flow between a network entity and a UE for transmitting a UE Route Selection Policy (URSP) rule according to various embodiments of the disclosure.
FIG. 3 illustrates an operation flow for performing Radio Access Technology (RAT) level registration according to various embodiments of the disclosure.
FIG. 4 illustrates an operation flow for utilizing multiple RATs in a PDU session establishment procedure according to various embodiments of the disclosure.
FIG. 5 illustrates an operation flow for utilizing multiple S-network slice selection assistance information (NSSAI) in a PDU session establishment procedure according to various embodiments of the disclosure.
FIG. 6 illustrates a structure of a base station according to various embodiments of the disclosure.
FIG. 7 illustrates a structure of a UE according to various embodiments of the disclosure.

### [Mode for the Invention]

In a 5G system, an operator may provide a plurality of virtual networks (i.e., network slices) via a single physical mobile communication network by using network slicing technology. In this case, a 5G UE may transmit and receive application data with a server by using data plane resources allocated to a specific slice. The disclosure proposes a method in which a UE may transmit and receive application data with a server via data plane resources allocated to two or more network slices. In addition, the disclosure proposes a method in which a UE may transmit and receive application data via data plane resources provided via two or more Radio Access Technologies (RATs).

A 5G mobile communication network includes a 5G user equipment (UE or terminal), a 5G radio access network (RAN, base station, 5G nodeB (gNB), evolved nodeB (eNB), etc.), and a 5G core network. The 5G core network includes network functions (NFs), such as an access and mobility management function (AMF) which provides a mobility management function of a UE, a session management function (SMF) which provides a session management function, a user plane function (UPF) which serves to transfer data, a policy control function (PCF) which provides a policy control function, a unified data management (UDM) which provides a function to manage data such as subscriber data and policy control data, and a unified data repository (UDR) which stores data of various network functions (NFs) such as the UDM.

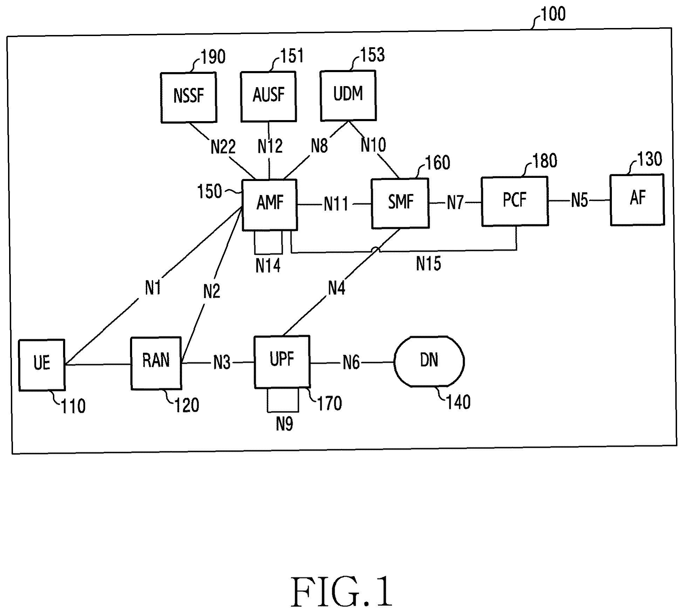

In 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. To satisfy specialized requirements of services/applications, a network operator configures a virtual end-to-end network referred to as a network slice, so as to provide services. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices.

The disclosure proposes a method in which a UE may transmit and receive application data with a server via data plane resources allocated to two or more network slices (for example, PDU sessions established on two network slices).

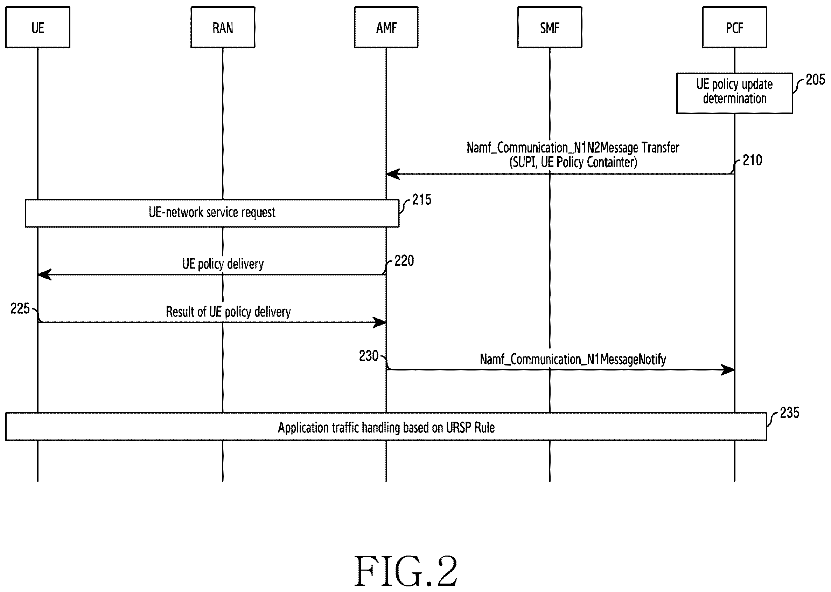

FIG. 2 illustrates an operation flow between a network entity and a UE for transmitting a UE Route Selection Policy (URSP) rule according to various embodiments of the disclosure. Specifically, FIG. 2 shows a method in which a PCF transmits one or more URSP rules, including RAT selection or multi-network slice selection, to the UE.

Referring to FIG. 2, in operation 205, the PCF may determine in an initial registration procedure or the like that an update of a UE policy is required. When the PCF determines that one or more URSP rules included in the UE Policy need to be updated, the PCF may determine a UE Policy including one or more new URSP rules, and initiate a procedure for delivering the determined UE Policy to the UE. The URSP rule indicates a path via which the application traffic of the UE is to be transmitted, and may be configured with the following information, but is not limited thereto.
- Rule precedence, a traffic descriptor (TD), and a list of route selection descriptions (RSD)

The TD may include an IP descriptor (e.g., source IP address, source port number, destination IP address, destination port number, protocol type, etc.), connection capability (information provided when a UE application requests a connection for traffic transmission (e.g., traffic category such as gaming traffic, enterprise traffic)), an app ID (e.g., an identifier for an application), and a Data Network Name (DNN) (e.g., a DNN for Internet, a DNN for telephony service, etc.).

According to an embodiment of the disclosure, the RSD may include one or more of the following, without being limited thereto.
- Multi-Network Slice Selection:

When traffic is to be delivered via one S-NSSAI (i.e., a network slice identifier), the network slice selection may include one or more S-NSSAIs, along with priority information for each S-NSSAI.

When traffic is to be delivered via two or more S-NSSAIs, the multi-network slice selection may include one or more S-NSSAI pairs composed of two pairs of S-NSSAIs (or two or more sets), with priority information for each pair of S-NSSAIs. In each set, priority information for the S-NSSAIs and/or information on an S-NSSAI configured as a primary may also be included.
- Radio Access Type Selection:

The Radio Access Type selection may include information indicating whether traffic is to be delivered via a single Radio Access Technology (RAT) (i.e., single RAT selection), information indicating whether traffic is to be delivered via multiple RATs (i.e., multi-RAT selection), and additional information for each case, without being limited thereto.

When traffic is to be delivered via a single RAT, the Radio Access Type selection may include one or more RATs, along with priority information for each RAT. In this case, each RAT may be selected from among 3GPP RATs. Examples of 3GPP RATs include 5G New Radio (NR), 5G NR (LEO), 5G NR (MEO), 5G NR (GEO), 5G NR (OTHERSAT), and E-UTRA. Here, 5G New Radio (NR) refers to a RAT utilizing terrestrial network communication technology. 5G NR (LEO), 5G NR (MEO), 5G NR (GEO), and 5G NR (OTHERSAT) respectively refer to RAT utilizing communication technologies of Low Earth Orbit (LEO) satellites, RAT utilizing communication technologies of Medium Earth Orbit (MEO) satellites, RAT utilizing communication technologies of Geostationary Orbit (GEO) satellites, and other satellite communication technologies. Meanwhile, the Radio Access Type selection may include, instead of a specific RAT, a Terrestrial RAT (e.g., 5G NR or E-UTRA), a RAT for satellite access, and the like.

When traffic is to be delivered via two or more RATs, the RAT selection may include one or more RAT pairs composed of two pairs of RATs (or two or more sets), with priority information for each pair of RATs. Within each RAT set, priority information for the RATs and/or information on a RAT configured as a primary may also be included.

In addition, the RSD within each URSP rule generated by the PCF may include, in addition to the information described above (e.g., Multi-network slice selection, RAT selection), an RSD precedence value, a single network slice selection preference, a DNN selection, a session service continuity (SSC) mode selection, and the like.

In operation 210, the PCF may transmit, to the AMF, information including a UE Policy Container containing the UE Policy of operation 205 and a Subscription Permanent Identifier (SUPI), which is an identifier of the UE.

In operation 215, when the UE is in a CM-IDLE state (i.e., without a control plane connection with the AMF) and is reachable via 3GPP access, the AMF may transmit a Paging message to the UE.

According to an embodiment of the disclosure, the UE that has received the Paging message may transmit a Service Request to the network to establish a control plane connection with the AMF.

In operation 220, when the UE is in a CM-IDLE state, the AMF may transmit the UE Policy Container to the UE via the RAN.

In operation 225, the UE may perform an update of the UE Policy, based on the UE Policy information included in the received UE Policy Container. The UE may further transmit, to the AMF, a result of the update (i.e., whether the UE Policy update is successful) based on the received UE Policy.

In operation 230, the AMF may transmit to the PCF whether the UE Policy update received from the UE is successful.

In operation 235, when application traffic occurs and the UE Policy information received from the AMF includes a URSP rule, the UE may handle the application traffic based on the URSP rule. For example, upon occurrence of application traffic, the UE may identify whether there exists a Traffic Descriptor (TD) matching the information of the application traffic, starting from the URSP rule having high precedence. When a matching TD exists, the UE may select an available RSD. The UE may then identify whether there exists an available PDU session that satisfies all RSD components (i.e., indicating RAT selection, multi-slice selection, DNN selection, SSC mode selection, etc., which may be included in the RSD) included in the selected RSD. For example, when the RAT selection includes 5G NR (LEO) and a PDU session associated with 5G NR (LEO) exists, the UE may transmit application traffic via the corresponding PDU session. When no corresponding PDU session exists, the UE may transmit a request to the network to establish a PDU session including 5G NR (LEO). For example, when the RAT selection includes two RATs (5G NR and 5G NR (GEO)) and the UE has available PDU sessions associated with both 5G NR and 5G NR (GEO), the UE may transmit application traffic via the corresponding PDU sessions. When no corresponding PDU session exists, the UE may transmit a request to the network to establish a PDU session including the RATs (in this case, 5G NR and 5G NR (GEO)).

In addition, for example, when a matched Multi-Network Slice selection for the application traffic includes S-NSSAI1 and S-NSSAI2 (i.e., the RSD of the URSP rule matched to the application traffic indicates that S-NSSAI1 and S-NSSAI2 are to be simultaneously utilized), and PDU sessions associated with S-NSSAI1 and S-NSSAI2 exist, the UE may transmit application traffic via the corresponding PDU sessions. When no corresponding PDU session exists, the UE may transmit a request to the network to establish a PDU session including S-NSSAI1 and S-NSSAI2.

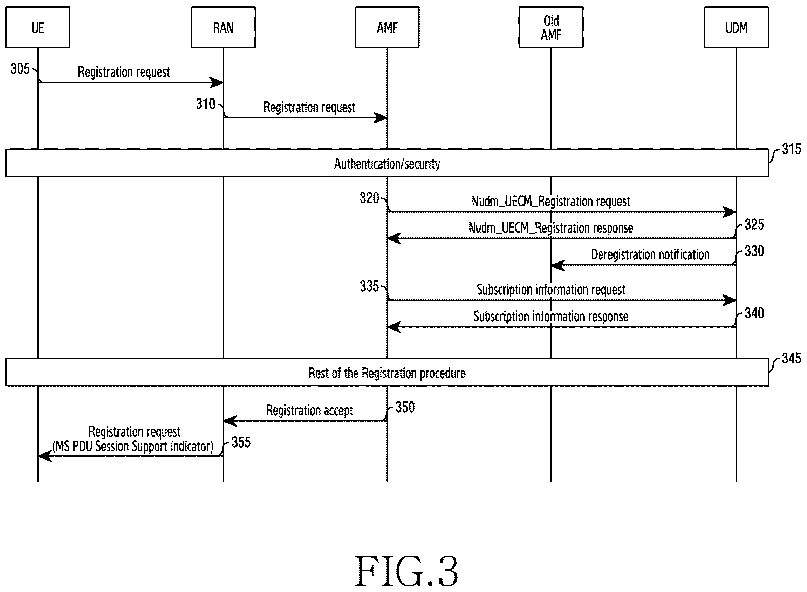

FIG. 3 illustrates an operation flow for performing Radio Access Technology (RAT) level registration according to various embodiments of the disclosure.

Referring to FIG. 3, in operation 305, a UE may transmit an AN message to a base station (RAN), and the AN message may include an AN parameter, a registration request, and the like.

The registration request message may include at least one of a UE identifier (e.g., Subscription Concealed Identifier (SUCI), 5G-Globally Unique Temporary Identity (5G-GUTI), or Permanent Equipment Identifier (PEI)), a requested NSSAI, and a UE Mobility Management (MM) core network capability.

When the UE is capable of simultaneous transmission and reception using multiple RATs and registration for multiple 3GPP RATs, the UE MM CN capability may include information indicating this (e.g., support of dual 3GPP RAT registration). Instead of "Dual 3GPP RAT registration," the term "multi-3GPP RAT registration" may also be used.

When the UE performs an RAT-level registration request (e.g., registering for 5G NR or registering for 5G NR for satellite), information indicating this may be included in the registration request.

In operation 310, the RAN may select an AMF based on information in the AN message received from the UE. The RAN may forward an N2 message containing N2 parameters, a registration request, etc., to the selected AMF. The N2 parameters may include the selected PLMN ID, UE location information, and a UE context request. The N2 message may also include a RAN ID. When the UE supports dual 3GPP RAT, the RAN may transmit a dual 3GPP RAT indication in the message delivered to the AMF via an RRC procedure with the UE.

When the AMF fails to receive a dual 3GPP RAT indication from the RAN, the AMF may determine the RAT type of the UE based on the RAN ID.

In operation 315, the AMF may perform authentication for the UE. In addition, the AMF may perform operations for establishing a secure connection with the UE, if necessary.

In operation 320, when the request type in the registration request received from the RAN is an initial registration and the UE MM CN Capability in the registration request includes support of dual 3GPP RAT registration or the registration request includes information indicating that RAT-level registration is performed, the AMF may transmit a registration message to the UDM to register itself as a serving NF for the RAT of the UE determined in operation 310.

According to an embodiment of the disclosure, a registration message transmitted by the AMF to the UDM may include the following information, without being limited thereto:
- NF ID and NF Type
- SUPI: identifier information of the UE
- Access Type: 3GPP access or non-3GPP access may be included.
- RAT Type: the RAT of the UE determined in operation 310 may be included.
- RAT indication registration indication: which may be included when the AMF has received, from the UE, information indicating that RAT-level registration is performed.

In operation 325, when the registration message received by the UDM from the AMF in operation 320 includes the RAT indication registration indication, the UDM may store, as a serving NF (in this case, the serving AMF) for the SUPI included in the registration message, the NF ID and NF Type included in the registration message, with respect to the Access Type and the RAT Type included in the registration message. Thereafter, the UDM may transmit a response message for the registration message to the AMF.

In operation 330, when, in operation 325, the UDM determines that a serving AMF already exists for the Access Type and the RAT, the UDM may transmit, to the old AMF, a message notifying that the Access Type and RAT have been deregistered.

According to an embodiment of the disclosure, the message indicating deregistration for the Access Type and RAT may include one or more of a SUPI, a RAT, an Access Type, and a RAT indication registration indication, without being limited thereto.

In operation 335, when the AMF does not have subscription information for the UE, the AMF may request subscription information for the UE from the UDM. At this time, the subscription information request message may include a SUPI.

In operation 340, the UDM may transmit subscription information for the UE to the AMF, the subscription information being included in a subscription information response message. The subscription information for the UE may include whether RAT-level registration is allowed for the UE and whether dual RAT registration is allowed.

According to an embodiment of the disclosure, when the subscription information received by the AMF from the UDM includes information indicating that RAT-level registration is not allowed, and when the registration request received in operation 310 includes information indicating RAT-level registration, the AMF may transmit a registration reject message to the UE.

According to an embodiment of the disclosure, when the subscription information received by the AMF from the UDM includes information indicating that dual RAT registration is not allowed, and when the registration request received in operation 310 includes information indicating RAT-level registration and the UE is already registered for another RAT, the AMF may transmit a registration reject message to the UE.

In operation 345, when a registration reject message is not transmitted in operation 340, the remaining registration procedure may be performed.

In operations 350 to 355, the AMF may transmit a registration accept message to the UE via the RAN. The registration accept message may include a RAT type.

When the UE receives the registration accept message, the UE may recognize that registration for the RAT has been completed and may transmit a PDU session establishment message for the corresponding RAT.

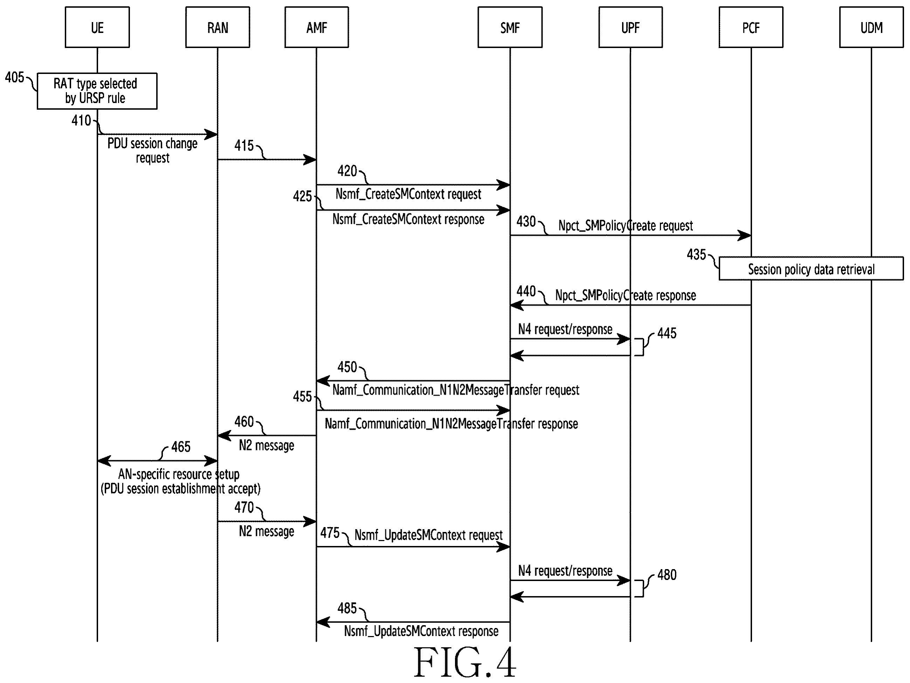

FIG. 4 illustrates an operation flow for utilizing multiple RATs in a PDU session establishment procedure according to various embodiments of the disclosure.

Referring to FIG. 4, in operations 405 to 410, when application traffic occurs, the UE may transmit a PDU session establishment request. When the UE stores one or more URSP rules, the UE may handle the application traffic based on the stored URSP rules. For example, upon occurrence of application traffic, the UE may identify, starting from the URSP rule having high precedence, whether there exists a Traffic Descriptor (TD) matching the information of the application traffic. When a matching TD exists, the UE may select an available RSD. The UE may then identify whether there exists an available PDU session that satisfies all RSD components (i.e., indicating RAT selection, multi-slice selection, DNN selection, SSC mode selection, etc.) included in the selected RSD. For example, when the matched RSD includes a RAT selection and indicates two or more RATs (e.g., a terrestrial network RAT and a non-terrestrial network RAT (e.g., 5G NR (LEO)), and when no corresponding PDU session exists, the UE may transmit, to the network, a PDU session establishment request including the following information, but not limited thereto.
- S-NSSAI: one S-NSSAI among slices allowed for each RAT may be included, or one S-NSSAI among slices allowed for the currently requested RAT (or Access Type) may be included.
- UE Requested DNN: a Data Network Name (DNN) may be included.
- PDU Session ID: indicating a PDU session identifier.
- RAT type(s): one or more RAT types (e.g., 5G NR, 5G NR (LEO), etc.) may be included. For example, when the UE requests a PDU session available for RAT types of 5G NR and 5G NR (GEO), 5G NR and 5G NR (GEO) may be included.
- Multi-RAT PDU Session indication: includes information indicating that the PDU session is requested for utilizing multiple RATs.
- S-NSSAI: one S-NSSAI among slices allowed for each RAT may be included.
- N1 SM container (PDU Session Establishment Request): which may include information indicating to the SMF that the request is for establishing a PDU session.

In operation 415, the RAN may forward, to the AMF, a PDU session establishment request message received from the UE.

In operation 420, the AMF may transmit, to the SMF, a message including information contained in the message received from the UE via the RAN. The message transmitted by the AMF to the SMF may include, but is not limited to, the following information.

- SUPI (an identifier for subscriber information of the UE), selected DNN, UE-requested DNN, S-NSSAI(s), PDU Session ID, Request Type, N1 SM container (PDU Session Establishment Request), Access Type, RAT Type(s) (when the message received from the UE includes two or more RAT types, and the base station to which the UE is currently connected supports all of the RAT types, a plurality of RAT types may be included), and Multi-RAT PDU Session indication (may be included when the message received from the UE includes the Multi-RAT PDU Session indication).

In operation 425, the SMF, having received a message from the AMF, may transmit a response message to the AMF.

In operation 430, the SMF may transmit, to the PCF, a policy information request message for the PDU session in order to receive policy information for the PDU session. The message may include, but is not limited to, the following information.
- S-NSSAI: the S-NSSAI received from the AMF in operation 420
- Data network name (DNN): the DNN received from the AMF in operation 420
- RAT type(s): the RAT type(s) received from the AMF in operation 420
- Multi-RAT PDU session indication: when the Multi-RAT PDU session indication received from the AMF in operation 420 is present, the corresponding information may be included.

In operation 435, upon receiving the policy request message for the PDU session from the SMF in operation 430, the PCF may receive session-related policy information from the UDM or the UDR, and then generate PCC rules. The generated PCC rules may include information indicating a level of QoS to be applied to specific traffic, together with Multi-RAT PDU Session Control information. When the message received from the SMF includes the Multi-RAT PDU session indication, or when one or more RATs are included, the PCF may include the Multi-RAT PDU Session Control information in the PCC rules via its own configuration.

The Multi-RAT PDU Session Control information may include, but is not limited to, the following information.

Application descriptors: application traffic identification information requiring multi-RAT PDU session control (e.g., an IP address and port address of a source/destination, an application ID, etc.)
- Steering functionality: which may include, for example, Quick UDP Internet Connection (QUIC), Multipath TCP (MPTCP), and the like.
- Steering mode: indicating a traffic distribution scheme. Examples include load balancing, active/standby, and aggregation, etc.
- Charging key for RAT types: indicating a charging key used for charging packets transmitted per RAT type of a multi-RAT PDU session.
- Monitoring key for RAT types: indicating a key used for monitoring data usage of packets transmitted per RAT type of a multi-RAT PDU session.

In operation 440, the PCF may transmit, to the SMF, a response message including the generated PCC rule(s).

In operation 445, when the message received from the PCF by the SMF includes a PCC rule and the PCC rule contains Multi-RAT PDU Session Control information, the SMF may generate, based on the Multi-RAT PDU Session Control information, Multi-RAT rules defining traffic distribution among RATs for specific application traffic, for both the UE and the UPF. The SMF may transmit the Multi-RAT rules to the UPF. The UPF, having received the Multi-RAT rules from the SMF, may transmit a response message to the SMF. The response message may include CN tunnel information for the PDU session.

In operation 450, the SMF may include the following information in a message transmitted to the AMF, but is not limited thereto.
- PDU Session ID: PDU session identifier
- N2 SM information: may include the PDU Session ID, QFI(s) (i.e., QoS Flow Identifiers), QoS Profile(s) (information including requirements of the QoS Flow), CN Tunnel Info (e.g., an address for transmitting user-plane data received by the RAN from the UE for the PDU session), S-NSSAI from the Allowed NSSAI, Session-AMBR (an aggregate maximum bitrate for the session), and the like.
- N1 SM container (PDU Session Establishment Accept): the PDU Session Establishment Accept message may include Multi-RAT rules to be transmitted to the UE, along with QoS rules, DNN, S-NSSAI, and a Multi-RAT PDU session indication.

Here, the N2 SM information indicates information to be transmitted to the RAN, and the N1 SM container indicates information to be transmitted to the UE.

In operation 455, the AMF may transmit a response message to the SMF.

In operation 460, the AMF may transmit, to the RAN, information included in the message received from the SMF. In this case, the N1 SM container may be included in the message (i.e., an N2 message) transmitted to the base station.

According to an embodiment of the disclosure, the RAN may perform configuration for a PDU session based on the information included in the message received from the AMF.

In operation 465, the RAN may transmit, to the UE, the N1 SM container message received from the AMF in operation 460. In addition, the RAN may perform resource setup for the access network (AN) according to QoS-related information.

In operation 470, the RAN may transmit, to the AMF, a message indicating that PDU session establishment has been performed in the RAN. The message transmitted by the RAN to the AMF may include AN tunnel information indicating an address at which the base station receives user-plane data for the PDU session.

In operation 475, the AMF may transmit, to the SMF, a message including the AN tunnel information.

In operation 480, the SMF may transmit, to the UPF, a message including AN tunnel information. The UPF may, for the PDU session, configure an address of a downlink tunnel using the AN tunnel information and then transmit a response message to the SMF.

In operation 485, the SMF may transmit, to the AMF, a response message for the message received in operation 475.

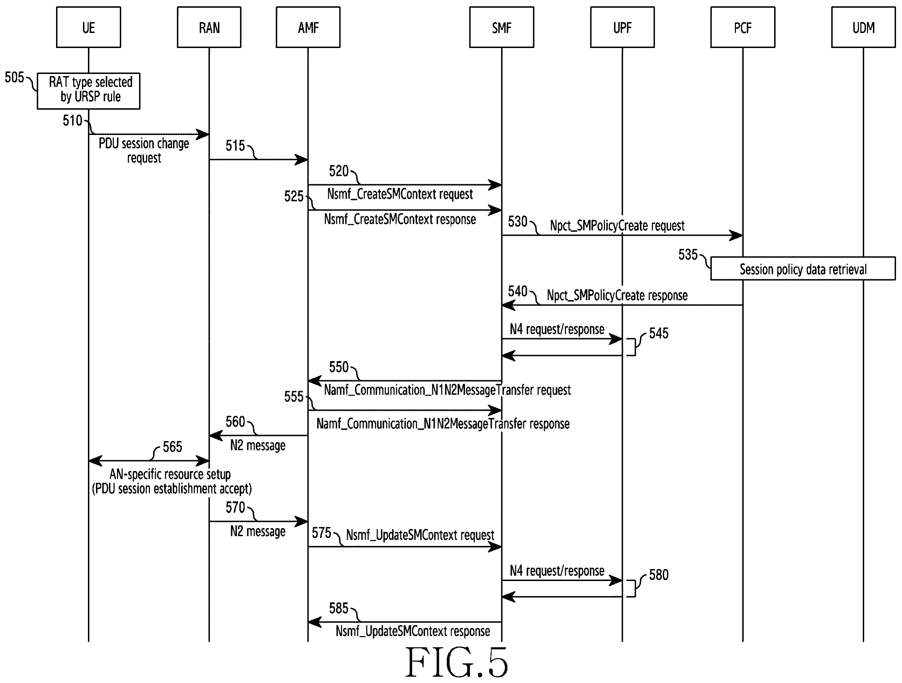

FIG. 5 illustrates an operation flow utilizing multiple S-NSSAIs in a PDU session establishment procedure according to various embodiments of the disclosure.

In operations 505 to 510, when application traffic occurs, the UE may transmit a PDU session establishment request. When the UE stores one or more URSP rules, the UE may handle the application traffic based on the URSP rules. For example, upon the occurrence of application traffic, the UE may identify, starting from a URSP rule having high precedence, whether there exists a traffic descriptor (TD) matching information of the application traffic. When a matching TD exists, an available RSD may be selected. The UE may identify whether there exists an available PDU session satisfying all RSD components (i.e., indicating RAT selection, multi-slice selection, DNN selection, SSC mode selection, etc. which may be included in the RSD) included in the selected RSD. For example, when the matching RSD includes multi-slice selection and indicates two or more S-NSSAIs, and when no corresponding PDU session exists, the UE may transmit, to the network, a PDU session establishment request including the following information, but not limited thereto.
- S-NSSAIs: two or more S-NSSAIs may be included.
- UE Requested DNN: a data network name (DNN) may be included.
- PDU Session ID: indicating an identifier of the PDU session.
- Multi-Slice PDU Session indication: which includes information indicating that a PDU session utilizing multiple slices is requested.
- N1 SM container (PDU Session Establishment Request): information indicating a PDU session establishment request to the SMF may be included.

In operation 515, the RAN may forward, to the AMF, a PDU session establishment request message received from the UE.

In operation 520, the AMF may transmit, to the SMF, a message including information contained in the message received from the UE via the RAN. When the message received from the UE includes multiple S-NSSAIs and when different SMFs are selected for the respective S-NSSAIs, operation 520 may be performed for each S-NSSAI.

The message transmitted by the AMF to the SMF may include, but is not limited to, the following information.
- SUPI (an identifier of subscriber information of the UE), selected DNN, UE requested DNN, S-NSSAI(s), PDU Session ID, Request Type, N1 SM container (PDU Session Establishment Request), Access Type, RAT Type(s), and Multi-Slice PDU Session indication (when the message received from the UE includes a Multi-Slice PDU Session indication, the corresponding information may be included).

In operation 525, the SMF, having received a message from the AMF, may transmit a response message to the AMF.

In operation 530, the SMF may transmit, to the PCF, a policy information request message for the PDU session in order to receive policy information for the PDU session. The message may include, but is not limited to, the following information.
- S-NSSAI: the S-NSSAI received from the AMF in operation 520
- DNN: the DNN received from the AMF in operation 520
- RAT type(s): the RAT type(s) received from the AMF in operation 520
- Multi-Slice PDU session indication: when the Multi-Slice PDU session indication received from the AMF in operation 520 is present, the corresponding information may be included.

In operation 535, when the PCF receives, from the SMF in operation 530, a policy request message for a PDU session, the PCF may receive session-related policy information from the UDM or the UDR and then generate PCC rules. The generated PCC rules may include information indicating a level of QoS to be applied to specific traffic, together with Multi-RAT PDU Session Control information. When the message received from the SMF includes the Multi-RAT PDU session indication, or when one or more RATs are included, the PCF may include the Multi-RAT PDU Session Control information in the PCC rules via its own configuration.

The Multi-Slice PDU Session Control information may include the following information, but not limited thereto.
application descriptors: application traffic identification information requiring multi-RAT PDU session control (e.g., an IP address and port address of a source/destination, an application ID, etc.)
- Steering functionality: which may include, for example, QUIC, MPTCP, and the like.
- Steering mode: indicating a traffic distribution scheme among slices. Examples include load balancing, active/standby, and aggregation, etc.
- Charging key for slice: indicating a charging key used for charging packets transmitted per slice of a multi-slice PDU session.
- Monitoring key for slice: indicating a key used for monitoring data usage of packets transmitted per slice of a multi-RAT PDU session.

In operation 540, the PCF may transmit, to the SMF, a response message including the generated PCC rule(s).

In operation 545, when the message received from the PCF by the SMF includes a PCC rule and the PCC rule includes Multi-Slice PDU Session Control information, the SMF may generate, based on the Multi-Slice PDU Session Control information, Multi-Slice rules indicating traffic distribution rules among slices for specific application traffic, for each of the UE and the UPF. The SMF may transmit the Multi-Slice rules to the UPF. The UPF, upon receiving the Multi-Slice rules from the SMF, may transmit a response message. The response message may include CN tunnel information for the PDU session.

In operation 550, the SMF may include the following information in a message transmitted to the AMF, without being limited thereto.
- PDU Session ID: an identifier of the PDU session
- N2 SM information: which may include a PDU Session ID, QFI(s) (i.e., QoS Flow Identifiers), QoS Profile(s) (information including requirements of QoS Flows), CN Tunnel Info (e.g., an address for transmitting user plane data received by the RAN from the UE for the PDU session), S-NSSAI from the Allowed NSSAI, Session-AMBR (a maximum aggregate bitrate for the session), and the like.
- N1 SM container (PDU Session Establishment Accept): a PDU session establishment accept message that may include, together with a Multi-RAT rule to be transmitted to the UE, a QoS rule, DNN, S-NSSAI, a Multi-Slice PDU session indication, and the like.

Here, the N2 SM information indicates information to be transmitted to the RAN, and the N1 SM container indicates information to be transmitted to the UE.

In operation 555, the AMF may transmit a response message to the SMF.

In operation 560, the AMF may transmit, to the RAN, information included in the message received from the SMF. In this case, the N1 SM container may be included in a message (i.e., an N2 message) transmitted to the base station.

According to an embodiment of the disclosure, the RAN may perform configuration for the PDU session based on the information included in the message received from the AMF.

In operation 565, the RAN may transmit, to the UE, the N1 SM container message received from the AMF in operation 560. The RAN may also perform resource setup for the Access Network (AN) according to QoS-related information.

In operation 570, the RAN may transmit, to the AMF, a message indicating that PDU session establishment has been performed at the RAN. The message transmitted by the RAN to the AMF may include AN tunnel information indicating an address at which the base station receives user plane data for the PDU session.

In operation 575, the AMF may transmit, to the SMF, a message including the AN tunnel information.

In operation 580, the SMF may transmit the AN tunnel information to the UPF. The UPF may configure an address of a downlink tunnel for the PDU session using the AN tunnel information and then transmit a response message to the SMF.

In operation 585, the SMF may transmit, to the AMF, a response message to the message received in operation 575.

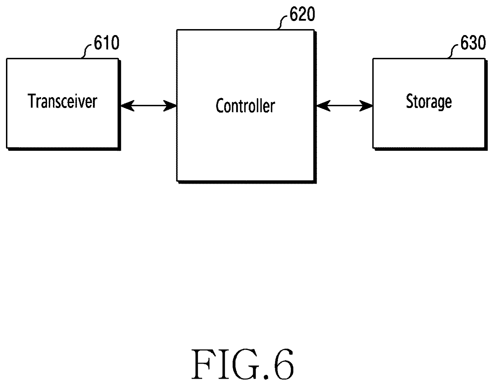

FIG. 6 illustrates a structure of a base station according to various embodiments of the disclosure.

Referring to FIG. 6, the base station may include a transceiver 610, a controller 620, and a storage 630. The transceiver 610, the controller 620, and the storage 630 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 610 and the controller 620. Furthermore, the transceiver 610, the controller 620, and the storage 630 may be implemented in the form of a single chip.

The transceiver 610 refers to a base station receiver and a base station transmitter as a whole, and may transmit/receive signals with UEs, other base stations, and other network devices. The transmitted/received signals may include control information and data. The transceiver 610 may transmit, for example, system information, synchronization signals, or reference signals to UEs. To this end, the transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver. The transceiver 610 may include wired/wireless transceivers, and may include various components for transmitting/receiving signals. In addition, the transceiver 610 may receive signals through a communication channel (e.g., a radio channel), output the same to the controller 620, and transmit signals output from the controller 620 through the communication channel. Furthermore, the transceiver 610 may receive communication signals, output same to a processor, and transmit signals output from the processor to UEs, other base stations, or other network entities through a wired/wireless network.

The storage 630 may store programs and data necessary for operations of the base station. In addition, the storage 630 may store control information or data included in signals acquired by the base station. The storage 630 may include storage media such as a ROM, a RAM, a hard disk, a CD-ROM, and a DVD, or a combination of storage media. In addition, the storage 630 may store at least one of information transmitted/received through the transceiver 610 and information generated through the controller 620.

As used herein, the controller 620 may be defined as a circuit, an application specific integrated circuit, or at least one processor. The processor may include a communication processor (CP) which performs control for communication and an application processor (AP) which controls upper layers such as application programs. The controller 620 may control the overall operation of the base station according to the embodiments proposed in the disclosure. For example, the controller 620 may control signal flows between the respective blocks to perform operations according to the above-described flowcharts.

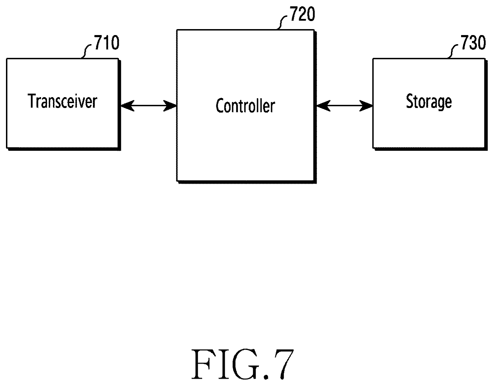

FIG. 7 illustrates a structure of a UE according to various embodiments of the disclosure.

Referring to FIG. 7, the UE may include a transceiver 710, a controller 720, and a storage 730. The transceiver 710, the controller 720, and the storage 730 may be operated according to the above-described communication methods of the UE. Components of the UE are not limited to the above-described example. For example, the UE may include a larger or smaller number of components than the above-described components. For example, the UE may include the transceiver 710 and the controller 720. Furthermore, the transceiver 710, the controller 720, and the storage 730 may be implemented in the form of a single chip.

The transceiver 710 refers to a UE receiver and a UE transmitter as a whole, and may transmit/receive signals with base stations, other UEs, and other network entities. The signals transmitted/received with base stations may include control information and data. The transceiver 710 may receive, for example, system information, synchronization signals, or reference signals from the base station. To this end, the transceiver 710 may include an RF transmitter configured to up-convert and amplify the frequency of transmitted signals, an RF receiver configured to low-noise-amplify received signals and down-convert the frequency thereof, and the like. However, this is only an embodiment of the transceiver 710, and the components of the transceiver 710 are not limited to the RF transmitter and the RF receiver. Also, the transceiver 710 may include wired/wireless transceivers, and may include various components for transmitting/receiving signals. In addition, the transceiver 710 may receive signals through a radio channel, output the same to the controller 720, and transmit signals output from the controller 720 through the radio channel. Furthermore, the transceiver 710 may receive communication signals, output same to a processor, and transmit signals output from the processor to network entities through a wired/wireless network.

The storage 730 may store programs and data necessary for operations of the UE. In addition, the storage 730 may store control information or data included in signals acquired by the UE. The storage 730 may include storage media such as a ROM, a RAM, a hard disk, a CD-ROM, and a DVD, or a combination of storage media.

As used herein, the controller 720 may be defined as a circuit, an application specific integrated circuit, or at least one processor. The processor may include a communication processor (CP) which performs control for communication and an application processor (AP) which controls upper layers such as application programs. The controller 720 may control the overall operation of the UE according to the embodiments proposed in the disclosure. For example, the controller 720 may control signal flows between the respective blocks to perform operations according to the above-described flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a user equipment (UE) in a wireless communication system, the method comprising:
receiving UE policy information from an access and mobility management function (AMF) entity via a base station;
updating a UE policy, based on the received UE policy information;
transmitting updated UE policy information to the AMF entity;
in case that traffic occurs, selecting at least one radio access technology (RAT) associated with the traffic, based on the updated UE policy information; and
transmitting a protocol data unit (PDU) session establishment request message to the AMF entity, based on the selected at least one RAT.

2. The method of claim 1, wherein the UE policy information comprises information indicating a RAT pair comprising two RATs or one RAT associated with the traffic.

3. The method of claim 1, further comprising:
receiving, from the base station, a PDU session establishment accept message in response to the PDU session establishment request message; and
transmitting the traffic, based on the selected at least one RAT and a PDU session indicated by the PDU session establishment accept message.

4. The method of claim 1, comprising:
transmitting, to the base station, a RAT registration request message comprising RAT registration information; and
receiving a RAT registration accept message from the AMF entity via the base station.

5. The method of claim 4, wherein the RAT registration accept message comprises information on a RAT for which registration has been completed, and wherein the at least one RAT associated with the traffic is based on the information on the RAT for which registration has been completed.

6. A user equipment (UE) in a wireless communication system, comprising:
a transceiver; and
a controller coupled to the transceiver,
wherein the controller is configured to:
receive UE policy information from an access and mobility management function (AMF) entity via a base station;
update a UE policy, based on the received UE policy information;
transmit updated UE policy information to the AMF entity;
in case that traffic occurs, select at least one radio access technology (RAT) associated with the traffic, based on the updated UE policy information; and
transmit a protocol data unit (PDU) session establishment request message to the AMF entity, based on the selected at least one RAT.

7. The UE of claim 6, wherein the UE policy information comprises information indicating a RAT pair comprising two RATs or one RAT associated with the traffic.

8. The UE of claim 6, wherein the controller is configured to:
receive, from the base station, a PDU session establishment accept message in response to the PDU session establishment request message; and
transmit the traffic, based on the selected at least one RAT and a PDU session indicated by the PDU session establishment accept message.

9. The UE of claim 6, wherein the controller is configured to:
transmit, to the base station, a RAT registration request message comprising RAT registration information; and
receive a RAT registration accept message from the AMF entity via the base station.

10. The UE of claim 9, wherein the RAT registration accept message comprises information on a RAT for which registration has been completed, and
wherein the at least one RAT associated with the traffic is based on the information on the RAT for which registration has been completed.

11. A method performed by an access and mobility management function (AMF) entity in a wireless communication system, the method comprising:
receiving user equipment (UE) policy information from a policy control function (PCF) entity;
transmitting the UE policy information to a UE via a base station;
receiving, from the UE, updated UE policy information based on the UE policy information; and
receiving, from the UE, a protocol data unit (PDU) session establishment request message based on at least one radio access technology (RAT) selected by the UE,
wherein the at least one RAT is at least one RAT associated with the traffic, which is selected by the UE, based on the UE policy information, in case that traffic occurs.

12. The method of claim 11, wherein the UE policy information comprises information indicating a RAT pair comprising two RATs or one RAT associated with the traffic.

13. The method of claim 11, comprising:
receiving a RAT registration request message comprising RAT registration information from the base station;
performing authentication of the UE, based on the RAT registration information;
transmitting, to a unified data management (UDM) entity, a subscription request message comprising subscription request information for the UE;
receiving a subscription response message from the UDM entity; and
transmitting a RAT registration accept message to the UE via the base station,
wherein the RAT registration accept message comprises information on a RAT for which registration has been completed, and
wherein the at least one RAT associated with the traffic is based on the information on the RAT for which registration has been completed.

14. An access and mobility management function (AMF) entity in a wireless communication system, comprising:
a transceiver; and
a controller coupled to the transceiver,
wherein the controller is configured to:
receive user equipment (UE) policy information from a policy control function (PCF) entity;
transmit the UE policy information to a UE via a base station;
receive updated UE policy information based on the UE policy information from the UE; and
receive a protocol data unit (PDU) session establishment request message based on at least one radio access technology (RAT) selected by the UE,
wherein the at least one RAT is at least one RAT associated with the traffic, which is selected by the UE, based on the UE policy information, in case that traffic occurs.

15. The AMF entity of claim 14, wherein the UE policy information comprises information indicating a RAT pair comprising two RATs or one RAT associated with the traffic.
